# EUROPEAN PATENT APPLICATION

(11) **EP 4 741 311 A1**
(43) Date of publication of application: **13.05.2026**
(21) Application number: 24835975.4
(22) Date of filing: 27.06.2024
(51) Int. Cl.: B65D 65/40, B65D 81/26

(54) **AIR-PERMEABLE PACKAGING MATERIAL FOR OXYGEN SCAVENGER AND METHOD FOR MANUFACTURING SAME**

(30) Priority: 06.07.2023 JP 2023111440
(71) Applicant: MITSUBISHI GAS CHEMICAL COMPANY, INC., Chiyoda-ku Tokyo 100-8324 (JP)
(72) Inventor: SATO, Daiki, Tokyo 125-8601 (JP); MASUYAMA, Tomohiro, Tokyo 125-8601 (JP); WATANABE, Risa, Tokyo 125-8601 (JP)
(74) Representative: Müller-Boré & Partner Patentanwälte PartG mbB
(86) International application number: PCT/JP2024/023343
(87) International publication number: WO 2025/009462

(57) **Abstract**

An air-permeable packaging material for an oxygen scavenger includes, in this order, an outer layer containing a thermoplastic resin, an intermediate layer containing one or more selected from paper and nonwoven fabric, and an inner layer containing a linear low-density polyethylene, the inner layer includes a through-hole H1, the through-hole H1 having an opening diameter φ1 of 150 µm or more and 3000 µm or less, and when differential scanning calorimetry is performed using the inner layer as a measurement sample in a nitrogen atmosphere under conditions of heating from 50°C to 200°C at 10°C per minute (heating 1), then cooling from 200°C to 50°C at 10°C per minute (cooling 1), and heating again from 50°C to 200°C at 10°C per minute (heating 2), a maximum endothermic peak is observed at 120°C or more in a process of (heating 2).

## Description

### Technical Field

The present invention relates to an air-permeable packaging material for an oxygen scavenger and a method for producing the same.

### Background Art

For various articles such as food products, beverages, medical and pharmaceutical products, medical supplies, cosmetics, metal products and electronic products that easily deteriorate or degrade under the effect of oxygen, an oxygen scavenger that removes oxygen in a sealed container containing these has been used to prevent oxidation degradation and to enable storage for a long period of time.

The oxygen scavenger has been employed in various manners based on the purpose or the form of use thereof, and an example thereof is a method of forming a pouch-shaped oxygen scavenger package by packaging an oxygen scavenger, which is in powder or tablet form, in a packaging material. When this oxygen scavenger package is placed in a sealed container storing a food product or the like, oxidation degradation of the food product or the like can be prevented because the oxygen scavenger in an inner part of the oxygen scavenger package removes oxygen in the sealed container.

As such a packaging material for an oxygen scavenger, for example, sheets of a resin, paper, nonwoven fabric, or the like or a laminate of these has been used. As a packaging material, in which a resin layer and a layer of paper or nonwoven fabric are laminated, for example, a packaging material obtained by laminating a resin layer having an air hole formed in advance and a layer of paper or nonwoven fabric has been used. This attempts to ensure air permeability with the outside and effectively exhibit oxygen scavenging performance of the oxygen scavenger by using the resin layer having a vent hole formed in advance.

However, a known air-permeable packaging material for an oxygen scavenger has a problem that the deoxidation time is not stable. One of the reasons for this problem is considered to be that the air permeance of the air-permeable packaging material is not stable.

Therefore, in order to solve such a problem, Patent Document 1 proposes a technique of facilitating control of a target value of air permeance of an air-permeable packaging material by using an air-permeable packaging material subjected to special processing.

### Citation List

### Patent Document

Patent Document 1: JP 2004-082460 A

### Summary of Invention

### Technical Problem

Since the special processing as proposed in Patent Document 1 requires apparatus and conditions suitable for the processing, existing manufacturing apparatus and manufacturing conditions cannot be used as they are, resulting in complexity of the processing and a significant burden on the manufacturer.

Therefore, there has been a demand for development of an air-permeable packaging material for an oxygen scavenger that can exhibit stable oxygen absorption performance with little individual difference by using existing manufacturing apparatus and manufacturing conditions without use of special manufacturing apparatus.

The present invention has been made in view of such circumstances, and an object of the present invention is to provide an air-permeable packaging material for an oxygen scavenger and a method for producing the same, the air-permeable packaging material being capable of providing an oxygen scavenger package that can exhibit excellent oxygen absorption performance with short deoxidation time and stable oxygen absorption performance with little individual difference by using existing manufacturing apparatus and manufacturing conditions without use of special manufacturing apparatus.

### Solution to Problem

The present inventors have found that the above object can be achieved when an air-permeable packaging material for an oxygen scavenger includes an outer layer, an intermediate layer, and an inner layer, in which the inner layer is made of a specific material and has specific through-holes, and have thus completed the invention.

That is, the gist of constituents of the present invention includes the following:
[1] An air-permeable packaging material for an oxygen scavenger, including, in this order, an outer layer containing a thermoplastic resin, an intermediate layer containing one or more selected from paper and nonwoven fabric, and an inner layer containing linear low-density polyethylene,
   in which the inner layer includes a through-hole H1, the through-hole H1 having an opening diameter φ1 of 150 µm or more and 3000 µm or less, and
   when differential scanning calorimetry is performed using the inner layer as a measurement sample in a nitrogen atmosphere under conditions of heating from 50°C to 200°C at 10°C per minute (heating 1), then cooling from 200°C to 50°C at 10°C per minute (cooling 1), and heating again from 50°C to 200°C at 10°C per minute (heating 2), a maximum endothermic peak is observed at 120°C or more in a process of (heating 2).
[2] The air-permeable packaging material for an oxygen scavenger according to [1] above, in which the intermediate layer includes an oil-resistant paper containing no fluorine.
[3] The air-permeable packaging material for an oxygen scavenger according to [1] or [2] above, having an air resistance of 10000 seconds or more as measured by an Oken type tester method in accordance with JIS P8117:2009.
[4] The air-permeable packaging material for an oxygen scavenger according to any one of [1] to [3] above, in which the through-hole H1 is present at a density of 1 hole/cm² or more and 60 holes/cm² or less.
[5] The air-permeable packaging material for an oxygen scavenger according to any one of [1] to [4] above, in which the intermediate layer has an air resistance of 2000 seconds or less as measured by an Oken type tester method in accordance with JIS P8117:2009.
[6] The air-permeable packaging material for an oxygen scavenger according to any one of [1] to [5] above, in which the intermediate layer is an oil-resistant paper containing no fluorine.
[7] The air-permeable packaging material for an oxygen scavenger according to any one of [1] to [6] above, in which the outer layer includes, in this order toward an intermediate layer side, a substrate layer containing one or more selected from polyethylene terephthalate and biaxially oriented polypropylene and a welding layer containing one or more selected from polyethylene and an ethylene copolymer.
[8] An oxygen scavenger package, including:
   the air-permeable packaging material for an oxygen scavenger according to any one of [1] to [7] above; and
   an oxygen scavenger wrapped by the air-permeable packaging material for an oxygen scavenger.
[9] A method for producing an air-permeable packaging material for an oxygen scavenger, the method including:
   obtaining an inner layer by pressing a heated metal needle against a film containing a linear low-density polyethylene to form a through-hole H1; and
   obtaining an air-permeable packaging material for an oxygen scavenger by laminating an outer layer containing a thermoplastic resin, an intermediate layer containing one or more selected from paper and nonwoven fabric, and the inner layer in this order,
   in which the metal needle has a radius of 0.3 mm or more and 2.0 mm or less,
   the metal needle has a surface temperature of 150°C or more and 450°C or less, and
   when differential scanning calorimetry is performed using the inner layer as a measurement sample in a nitrogen atmosphere under conditions of heating from 50°C to 200°C at 10°C per minute (heating 1), then cooling from 200°C to 50°C at 10°C per minute (cooling 1), and heating again from 50°C to 200°C at 10°C per minute (heating 2), a maximum endothermic peak observed is at 120°C or more in a process of (heating 2).

### Advantageous Effects of Invention

According to the present invention, it is possible to provide an air-permeable packaging material for an oxygen scavenger and a method for producing the same, the air-permeable packaging material being capable of providing an oxygen scavenger package that can exhibit excellent oxygen absorption performance with short deoxidation time and stable oxygen absorption performance with little individual difference by using existing manufacturing apparatus and manufacturing conditions without use of special manufacturing apparatus.

### Description of Embodiments

Embodiments of an air-permeable packaging material for an oxygen scavenger and a method for producing air-permeable packaging material for an oxygen scavenger according to the present invention will be described in detail below.

Note that, in the present description, a phrase of "A to B" indicating a numerical range means "A or more and B or less" (in the case of A < B), or "A or less and B or more" (in the case of A > B). Furthermore, in the present invention, a combination of preferable aspects is a more preferable aspect.

Furthermore, in the present description, "(meth)acrylate" means acrylate and/or methacrylate, "(meth)acryl" means acryl and/or methacryl, and "(meth)acrylic acid" means acrylic acid and/or methacrylic acid, and the like unless otherwise noted.

### [Air-Permeable Packaging Material for Oxygen Scavenger]

The air-permeable packaging material for an oxygen scavenger of the present invention includes, in this order, an outer layer containing a thermoplastic resin, an intermediate layer containing one or more selected from paper and nonwoven fabric, and an inner layer containing a linear low-density polyethylene, in which the inner layer includes a through-hole H1, the through-hole H1 having an opening diameter φ1 of 150 µm or more and 3000 µm or less, and when differential scanning calorimetry is performed using the inner layer as a measurement sample in a nitrogen atmosphere under conditions of heating from 50°C to 200°C at 10°C per minute (heating 1), then cooling from 200°C to 50°C at 10°C per minute (cooling 1), and heating again from 50°C to 200°C at 10°C per minute (heating 2), a maximum endothermic peak is observed at 120°C or more in a process of (heating 2).

According to the packaging material of the present invention, by virtue of the above configuration, it is possible to obtain an oxygen scavenger package that can exhibit excellent oxygen absorption performance with short deoxidation time and stable oxygen absorption performance with little individual difference by using existing manufacturing apparatus and manufacturing conditions without use of special manufacturing apparatus.

The reason why the packaging material of the present invention exhibits the above-mentioned effect is not clear but is assumed to be as follows.

The inner layer of the packaging material of the present invention contains a linear low-density polyethylene. The linear low-density polyethylene has a narrow molecular weight distribution, a small number of branched chains, a large molecular weight and exhibits good crystallinity, and it is therefore considered that through-holes having openings close to a circular shape can be obtained particularly when the hole opening treatment is performed with a hot needle. Further, it is considered that when the crystallinity is good and the maximum endothermic peak in the DSC curve obtained by differential scanning calorimetry is at 120°C or more, a portion away from the needle as a heat source can be quickly returned to a rigid state, and therefore, the polyethylene film does not unnecessarily stretch. As a result, a through-hole along the shape of the needle can be obtained. From the above, it is considered that the oxygen scavenger package can have stable air permeability with less individual difference, and the obtained oxygen scavenger package has excellent oxygen absorption performance with a short deoxidation time, and can exhibit stable oxygen absorption performance with less individual difference.

The air resistance of the air-permeable packaging material for an oxygen scavenger of the present invention is preferably 10000 seconds or more, more preferably 11000 seconds or more, and even more preferably 13000 seconds or more in terms of the air resistance as measured by the Oken type tester method in accordance with JIS P8117:2009. The air resistance of the air-permeable packaging material for an oxygen scavenger of the present invention is preferably 100000 seconds or less, more preferably 90000 seconds or less, even more preferably 50000 seconds or less, and still more preferably 20000 seconds or less in terms of the air resistance as measured by the Oken type tester method in accordance with JIS P8117:2009.

The air resistance is an average value of results of 30 times of measurement in accordance with JIS P8117:2009. A more specific method of measuring the air resistance is a method of measuring the air resistance 30 times in a mode in which the
median value of the measurable range is 2000, using a digital Oken type air permeability tester (EG02, available from Asahi Seiko Co., Ltd.) in accordance with JIS P8117:2009, as shown in Examples. The air resistance is an average value (ave.) of 30 times of the measurement.

The details of each layer and components thereof of the packaging material according to the present embodiment will be described below.

### <Outer Layer>

The outer layer is a layer containing a thermoplastic resin.

The outer layer is preferably a layer in which an outer side air hole H2 is formed.

The outer layer can use a monolayered film or a multilayered film made of two or more layers of different materials.

Since the outer layer and the intermediate layer are preferably bonded to each other by heat lamination, the outer layer is preferably a multilayer film composed of two or more thermoplastic resins having a large difference in melting point.

The intermediate layer preferably includes a substrate layer made of a thermoplastic resin having a high melting point and a welding layer made of a thermoplastic resin having a low melting point in this order toward the intermediate layer side.

Examples of thermoplastic resin preferably used for the substrate layer include polyethylene terephthalate, biaxially oriented polypropylene, and nylon, and one or more selected from polyethylene terephthalate and biaxially oriented polypropylene are more preferred.

Thermoplastic resin preferably used for the welding layer preferably contains a material having heat sealability. Examples of thermoplastic resin preferably used for the welding layer include polyethylene such as a low-density polyethylene, a medium-density polyethylene, a high-density polyethylene, and a linear (linear) low-density polyethylene; ethylene copolymers such as an ethylene-vinyl acetate copolymer, an ethylene-acrylic acid copolymer, an ethylene-ethyl acrylate copolymer, an ethylene-methacrylic acid copolymer, an ethylene-α-olefin copolymer obtained by polymerization using a metallocene catalyst, an ethylene-methyl methacrylate copolymer, and an ethylene-propylene copolymer; a polypropylene; an ionomer resin; a methylpentene polymer; a polybutene polymer; an acid-modified polyolefin resin obtained by modifying a polyolefin-based resin such as polyethylene or polypropylene with an unsaturated carboxylic acid such as acrylic acid, methacrylic acid, maleic acid, maleic anhydride, fumaric acid, or itaconic acid, a polyvinyl acetate-based resin, a poly(meth)acrylic resin, and a polyvinyl chloride-based resin, and one or more selected from polyethylene and ethylene copolymers are more preferred.

That is, the outer layer preferably includes, in this order toward an intermediate layer side, a substrate layer containing one or more selected from polyethylene terephthalate and biaxially oriented polypropylene and a welding layer containing one or more selected from polyethylene and an ethylene copolymer.

Note that a larger difference in melting points of thermoplastic resin of the inner layer and thermoplastic resin of the outer layer is preferred because the degree of freedom in heat-sealing conditions (temperature, pressure, time) becomes high.

The outer layer may further contain an additional component other than thermoplastic resin as long as the effect of the present invention is not impaired. Examples of such an additional component that can be used in the outer layer include additives, such as a stabilizer, a lubricant, an antistatic agent, an antifogging agent, a filler, a coloring agent, a plasticizer, and a nucleating agent.

The thickness of the outer layer is not particularly limited, but is preferably from 1 µm to 50 µm, more preferably from 2 µm to 40 µm, even more preferably from 4 µm to 35 µm, and particularly preferably from 8 µm to 30 µm. When the thickness of the outer layer is in the range described above, a packaging material having an adequate strength can be obtained, and a packaging material having a proper flexibility required for processing, such as bending, during the production of the oxygen scavenger package described below can be obtained.

The surface of the outer layer can be printed or painted by gravure printing and the like.

The outer layer is preferably a layer in which an outer side air hole H2 is formed.

The outer side air hole H2 is a hole passing through the outer layer.

The arrangement of the through-hole H1 of the inner layer and the outer side air hole H2 is not particularly limited, but it is preferable that the through-hole H1 and the outer side air hole H2 are not located at the same position. The phrase "at the same position" refers to a state in which a part of the through-hole H1 of the inner layer is visible when the outer side air hole H2 is viewed from the outer layer surface. Due to the through-hole H1 and the outer side air hole H2, which are not located at the same position, when an oxygen scavenger package is formed, leakage of the oxygen scavenger disposed inside to the outside can be effectively prevented while adhering of a component disposed outside to the oxygen scavenger disposed inside can be effectively prevented.

The hole diameter or hole density of the outer side air hole H2 can be appropriately adjusted to achieve a target air permeability (air permeance) as an entire packaging material. Specifically, the method of forming the outer side air hole H2, the shape, the opening diameter, and the like can be appropriately adjusted under the conditions described in the through-hole H1 of the inner layer described later.

### <Intermediate Layer>

The intermediate layer is a layer containing one or more selected from paper and nonwoven fabric. The intermediate layer prevents leakage of the oxygen scavenger contained in the oxygen scavenger package while a certain degree of durability, air permeability, and the like are imparted to the packaging material.

The intermediate layer is preferably a layer including oil-resistant paper. By including the oil-resistant paper, oil resistance can be imparted in addition to the above performance.

The material of the paper used for the intermediate layer is not particularly limited, and examples thereof include water-repellent paper, kraft paper, woodfree paper (machine-made paper), and Japanese paper.

The material of the nonwoven fabric used for the intermediate layer is not particularly limited, and examples thereof include a thermoplastic resin such as polyethylene, polypropylene, polyamide, and polyester. More specific examples of the nonwoven fabric used for the intermediate layer include a linear (linear) low-density polyethylene (LLDPE)-based nonwoven fabric, a polyethylene terephthalate-based nonwoven fabric, a composite nonwoven fabric (polyethylene terephthalate-polyethylene having a core-sheath structure), and Tyvek (registered trademark, available from DuPont-Asahi Flash Spun Products Co., Ltd.).

As mentioned above, the intermediate layer preferably includes an oil-resistant paper.

Because the oxygen scavenger package is used widely for food products, beverages, medical and pharmaceutical products, medical supplies, cosmetics, metal products, electronic products, and the like, there may be a large moisture or oil content depending on an object to be stored or storage environment. In such a case, when the moisture or oil content infiltrates into the oxygen scavenger from the packaging material, the oxygen scavenging performance may deteriorate due to deterioration of the oxygen scavenger or the oxygen scavenger may be contaminated; however, when the intermediate layer including the oil-resistant paper is provided, infiltration of the moisture or oil content can be suppressed, and deterioration, contamination, and the like of the oxygen scavenger can be prevented.

In the present description, the oil-resistant paper is a material obtained by imparting oil resistance to a paper or nonwoven fabric. The method of imparting the oil resistance is not particularly limited, and examples thereof include (1) a method of allowing a paper or nonwoven fabric to have oil resistance by filling gaps of the paper or nonwoven fabric, (2) a method of forming an oil resistant film by application of an oilproof agent having oil resistance or a chemical or the like that solidifies oil on a surface of a paper or nonwoven fabric, and (3) a method of allowing a paper or nonwoven fabric to contain (to be impregnated with or added inside by) an oilproof agent having oil resistance.

The intermediate layer preferably contains oil-resistant paper containing no fluorine. More preferably, the oil-resistant paper of the intermediate layer does not contain fluorine. Even more preferably, the intermediate layer is oil-resistant paper containing no fluorine. The oil-resistant paper containing no fluorine is specifically an oil-resistant paper, in which oil resistance is imparted to a paper or nonwoven fabric without use of a fluorine-containing oilproof agent (non-fluorine-based oil-resistant paper). As the non-fluorine-based oil-resistant paper, a known non-fluorine-based oil-resistant paper can be used without particular limitation as long as the non-fluorine-based oil-resistant paper is a oil-resistant paper containing no fluorine and having a certain degree of oil resistance. Examples thereof include (1) a non-fluorine-based oil-resistant paper, in which gaps of a paper or nonwoven fabric are filled and thus the paper or nonwoven fabric has oil resistance, (2) a non-fluorine-based oil-resistant paper, in which an oil resistant film is formed by application of a non-fluorine-based oilproof agent having oil resistance, a non-fluorine-based chemical that solidifies oil, or the like on a surface of a paper or nonwoven fabric, or (3) a non-fluorine-based oil-resistant paper obtained by allowing a paper or nonwoven fabric to contain (to be impregnated with or added inside by) a non-fluorine-based oilproof agent having oil resistance. Among them, the oil-resistant paper of the above (3) is preferred from the viewpoint of preventing oil staining (oil immersion) into the oxygen scavenger package, which may occur as a result of oil penetrating the inside of the through-hole H1 via the intermediate layer from the outer edge portion of the oxygen scavenger package or from the inside (hole inner side surface portion) of the outer side air hole H2 provided as necessary. Note that examples of the non-fluorine-based oilproof agent include a starch-based oilproof agent, an acrylic oilproof agent, and a polyester-based oilproof agent.

The basis weight of the oil-resistant paper is not particularly limited and is preferably from 5 to 200 g/m², more preferably from 15 to 150 g/m², and even more preferably from 25 to 90 g/m². When the basis weight of the oil-resistant paper is in the range described above, adequate oil resistance and durability can be achieved.

The air resistance of the intermediate layer as measured by the Oken type tester method in accordance with JIS P8117:2009 is preferably 2000 seconds or less, and more preferably 1000 seconds or less. The lower limit of the air resistance is not limited, but the air resistance is usually 100 seconds or more.

The air resistance is an average value of results of 30 times of measurement in accordance with JIS P8117:2009. A more specific method of measuring the air resistance is a method of measuring the air resistance 30 times in a mode in which the median value of the measurable range is 2000, using a digital Oken type air permeability tester (EG02, available from Asahi Seiko Co., Ltd.) in accordance with JIS P8117:2009, as shown in Examples. The air resistance is an average value (ave.) of 30 times of the measurement.

The intermediate layer may contain an additional component other than the components constituting paper, nonwoven fabric, and oil-resistant paper. Examples of such an additional component that can be used in the intermediate layer include a sizing agent (bleeding-preventing agent), a waterproof agent, a water-repellent agent, a paper strengthening agent, and a dye. Note that the intermediate layer is preferably made only of the oil-resistant paper.

The thickness of the intermediate layer is not particularly limited and is preferably from 5 to 300 µm, more preferably from 15 to 200 µm, and even more preferably from 30 to 150 µm. When the thickness of the intermediate layer is in the range described above, adequate oil resistance and durability can be achieved.

### <Inner Layer>

The inner layer is a layer containing a linear low-density polyethylene.

The inner layer includes a through-hole H1, and the opening diameter φ1 of the through-hole H1 is 150 µm or more and 3000 µm or less. Further, when differential scanning calorimetry is performed using the inner layer as a measurement sample in a nitrogen atmosphere under conditions of heating from 50°C to 200°C at 10°C per minute (heating 1), then cooling from 200°C to 50°C at 10°C per minute (cooling 1), and heating again from 50°C to 200°C at 10°C per minute (heating 2), the maximum endothermic peak is 120°C or more in the process of (heating 2).

The inner layer may further contain an additional component other than the linear low-density polyethylene. Examples of such an additional component that can be used in the inner layer include additives, such as a stabilizer, a lubricant, an antistatic agent, an antifogging agent, a filler, a coloring agent, a plasticizer, and a nucleating agent.

The inner layer may contain a thermoplastic resin other than the linear low-density polyethylene. However, from the viewpoint of heat sealability, it is preferable that substantially no other thermoplastic resin than a linear low-density polyethylene is contained. The content of the linear low-density polyethylene contained in the inner layer is preferably 70 mass% or more, more preferably 80 mass% or more, even more preferably 90 mass% or more, still more preferably 95 mass% or more, and 100 mass% or less with respect to the total amount of the resin in the inner layer.

Examples of thermoplastic resin other than the linear low-density polyethylene preferably used for the inner layer include polyethylene such as a low-density polyethylene, a medium-density polyethylene, and a high-density polyethylene other than the linear low-density polyethylene; ethylene copolymers such as an ethylene-vinyl acetate copolymer, an ethylene-acrylic acid copolymer, an ethylene-ethyl acrylate copolymer, an ethylene-methacrylic acid copolymer, an ethylene-α-olefin copolymer obtained by polymerization using a metallocene catalyst, an ethylene-methyl methacrylate copolymer, and an ethylene-propylene copolymer; a polypropylene; an ionomer resin; a methylpentene polymer; a polybutene polymer; an acid-modified polyolefin resin obtained by modifying a polyolefin-based resin such as polyethylene or polypropylene with an unsaturated carboxylic acid such as acrylic acid, methacrylic acid, maleic acid, maleic anhydride, fumaric acid, or itaconic acid, a polyvinyl acetate-based resin, a poly(meth)acrylic resin, and a polyvinyl chloride-based resin.

The thickness of the inner layer is not particularly limited, but is preferably from 0.5 µm to 80 µm, more preferably from 1 µm to 60 µm, even more preferably from 2 µm to 50 µm, and particularly preferably from 4 µm to 40 µm. When the thickness of the inner layer is in the range described above, sufficient adhesive strength can be achieved by heat-sealing in a short period of time.

When differential scanning calorimetry is performed using the inner layer as a measurement sample in a nitrogen atmosphere under conditions of heating from 50°C to 200°C at 10°C per minute (heating 1), then cooling from 200°C to 50°C at 10°C per minute (cooling 1), and heating again from 50°C to 200°C at 10°C per minute (heating 2), the inner layer has a maximum endothermic peak of 120°C or more in the process of (heating 2).

The phrase "using the inner layer as a measurement sample" means that all components (the linear low-density polyethylene or the resin composition) including thermoplastic resin containing the linear low-density polyethylene constituting the inner layer and other components (additives) are used as samples for differential scanning calorimetry (DSC). The term "all components" refers to the linear low-density polyethylene when the inner layer is composed only of the linear low-density polyethylene, and refers to the resin composition containing the linear low-density polyethylene when the inner layer is composed of the linear low-density polyethylene and other components (additives).

The term "maximum endothermic peak" refers to the largest peak among endothermic peaks present on a DSC curve obtained in the heating process, and the temperature of the maximum endothermic peak refers to the temperature at the top of the peak. Therefore, the expression "the maximum endothermic peak is 120°C or more" means that "the temperature at the top of the maximum endothermic peak is 120°C or more".

The maximum endothermic peak when differential scanning calorimetry is performed under the above-described conditions is 120°C or more, preferably 121°C or more, more preferably 122°C or more, and even more preferably 123°C or more. The upper limit is not limited, but is usually 140°C or less, and is preferably 130°C or less from the viewpoint of heat sealability and the viewpoint of easily forming a through-hole.

### (Through-Hole H1)

The inner layer has a through-hole H1, and the opening diameter φ1 of the through-hole H1 is 150 µm or more and 3000 µm or less.

The through-hole H1 is a hole penetrating the inner layer.

The diameter or hole density of the through-hole H1 can be appropriately adjusted to achieve target air permeability (air permeance) as an entire packaging material. Specifically, in a case where an edged tool or a needle is used, the adjustment can be made by the shape, introduction direction, arrangement, number, and the like of the edged tool or the needle; and in a case where a laser or an electron beam is used, the adjustment can be made by perforation conditions such as irradiation voltage, electric current, irradiation time, and irradiation direction.

In addition, the shape of the through-hole H1 is not particularly limited, and the cross section (the surface along the inner layer surface) is a circular shape, a polygonal shape such as a triangular shape and a square shape, an elliptical shape, or the like, but the longitudinal section (the cut surface perpendicular to the inner layer surface) is preferably a tapered shape from the inner layer outer surface (the surface not in contact with the intermediate layer) toward the intermediate layer side or from the intermediate layer side toward the inner layer outer surface. That is, the shape of the through-hole H1 is preferably a tapered shape such as a substantially conical shape (conical shape, truncated conical shape) or a substantially pyramidal shape (pyramidal shape, truncated pyramidal shape) from the inner layer outer surface toward the intermediate layer side or from the intermediate layer side toward the inner layer outer surface.

The through-hole H1 has an opening diameter φ1 (also simply referred to as a diameter φ1) of 150 µm or more and 3000 µm or less. The diameter φ1 of the through-hole H1 can be measured by the method described in Examples, and are each a dimension (major axis) of the longest portion of an opening diameter.

The diameter φ1 of the through-hole H1 is 150 µm or more and 3000 µm or less, preferably 200 µm or more and 2000 µm or less, more preferably 300 µm or more and 1000 µm or less, and even more preferably 300 µm or more and 800 µm or less from the viewpoint of air permeability and productivity. Within the above range, excellent productivity and stable air permeability can be exhibited, and therefore, the oxygen absorption performance of the oxygen scavenger package to be obtained can also be stabilized. In addition, the oxygen scavenger inside can be prevented from leaking to the outside.

In addition, when the through-hole has a tapered shape, from the viewpoint of air permeability and productivity, both the opening diameter of the surface of the inner layer in contact with the intermediate layer and the opening diameter of the surface of the inner layer not in contact with the intermediate layer are more preferably within the above range.

The through-hole H1 is preferably present at a density of 1 hole/cm² or more and 60 holes/cm² or less, more preferably 2 holes/cm² or more and 60 holes/cm² or less, and even more preferably 5 holes/cm² or more and 60 holes/cm² or less. Within the above range, excellent productivity and stable air permeability can be exhibited, and therefore, the oxygen absorption performance of the oxygen scavenger package to be obtained can also be stabilized.

### [Method for Producing Air-Permeable Packaging Material for Oxygen Scavenger]

The method for producing the air-permeable packaging material for an oxygen scavenger is not particularly limited, but the following method is preferred.

The method for producing an air-permeable packaging material for an oxygen scavenger of the present invention includes: obtaining an inner layer by pressing a heated metal needle against a film containing a linear low-density polyethylene to form a through-hole H1; and obtaining an air-permeable packaging material for an oxygen scavenger by laminating an outer layer containing a thermoplastic resin, an intermediate layer containing one or more selected from paper and nonwoven fabric, and the inner layer in this order, in which the metal needle has a radius of 0.3 mm or more and 2.0 mm or less, the metal needle has a surface temperature of 150°C or more and 450°C or less, and when differential scanning calorimetry is performed using the inner layer as a measurement sample in a nitrogen atmosphere under conditions of heating from 50°C to 200°C at 10°C per minute (heating 1), then cooling from 200°C to 50°C at 10°C per minute (cooling 1), and heating again from 50°C to 200°C at 10°C per minute (heating 2), a maximum endothermic peak observed is 120°C or more in a process of (heating 2).

### <Step of Obtaining Inner Layer>

The inner layer is obtained by pressing a heated metal needle against a film containing a linear low-density polyethylene to form a through-hole H1.

The hole opening treatment for forming the through-hole H1 is preferably a method of forming a hole by pressing a heated metal needle against the film containing the linear low-density polyethylene from the viewpoint of easy control of the size and position of the opening. The diameter of the metal needle may be any diameter that can be opened to satisfy the opening diameter φ1, but is preferably 0.3 mm or more and 2.0 mm or less, more preferably 0.3 mm or more and 1.0 mm or less, and even more preferably 0.5 mm or more and 0.7 mm or less. When the diameter of the needle is in the preferred range described above, the opening shape becomes stable, and adjustment of air permeance becomes easy. The surface temperature of the metal needle is preferably 150°C or more and 450°C or less, preferably 200°C or more and 400°C or less, and more preferably 300°C or more and 380°C or less. By heating the metal needle, the hole opening treatment can be more stably performed.

From the viewpoint of producing an air-permeable packaging material for an oxygen scavenger having stable density and shape of successive holes, a method of opening holes through a columnar jig having needles on a side face (hereinafter, also referred to as "needle roll") is more preferred. Furthermore, a needle pattern can be appropriately adjusted taking air permeance and the like into consideration.

The diameter of the through-hole H1 can be controlled by the jig used for the hole opening treatment, the formation direction, and the like. When a tapered conical needle is used, the vertical cross-section (the cross-section perpendicular to the inner layer surface plane) is tapered from the inner layer outer surface (the surface not in contact with the intermediate layer) toward the intermediate layer side, or from the intermediate layer side toward the inner layer outer surface, that is, the through-hole H1 is tapered and substantially conical (conical, truncated conical, etc.).

When differential scanning calorimetry is performed using the inner layer as a measurement sample in a nitrogen atmosphere under conditions of heating from 50°C to 200°C at 10°C per minute (heating 1), then cooling from 200°C to 50°C at 10°C per minute (cooling 1), and heating again from 50°C to 200°C at 10°C per minute (heating 2), the obtained inner layer has a maximum endothermic peak of 120°C or more as observed in the process of (heating 2).

The maximum endothermic peak when differential scanning calorimetry is performed under the above-described conditions is 120°C or more, preferably 121°C or more, more preferably 122°C or more, and even more preferably 123°C or more. The upper limit is not limited, but is usually 140°C or less, and is preferably 130°C or less from the viewpoint of heat sealability and the viewpoint of easily forming a through-hole.

### <Step of Obtaining Air-Permeable Packaging Material for Oxygen Scavenger by Lamination>

Next, an outer layer containing a thermoplastic resin, an intermediate layer containing one or more selected from paper and nonwoven fabric, and the inner layer are laminated in this order to obtain an air-permeable packaging material for an oxygen scavenger.

The phrase "laminated in this order" refers to the layer structure of the obtained packaging material, and does not indicate the order of the lamination steps. That is, the outer layer and the intermediate layer may be laminated in advance, the intermediate layer and the inner layer may be laminated in advance, or the three layers may be laminated at the same time.

For convenience of explanation, a method of laminating the intermediate layer and the inner layer in advance is shown below as an example, but the order is not limited to this order as described above.

The method of laminating the inner layer and the intermediate layer is not particularly limited, and a known method can be employed. For example, heat lamination may be employed, or dry lamination may be employed. In a case of dry lamination, lamination may be performed by using an adhesive agent in a manner that the order becomes inner layer/adhesive layer/intermediate layer. From the viewpoint of preventing leakage of an adhesive agent, no adhesive agent is preferably used. Specifically, heat lamination is more preferred than dry lamination.

The method of laminating the outer layer onto the laminate including the inner layer and the intermediate layer is not particularly limited, and a known method can be employed. For example, heat lamination may be employed, or dry lamination may be employed. In a case of dry lamination, lamination may be performed by using an adhesive agent in a manner that the order becomes intermediate layer/adhesive layer/outer layer. From the viewpoint of preventing leakage of an adhesive agent, no adhesive agent is preferably used. Specifically, heat lamination is more preferred than dry lamination.

In particular, in a case of heat lamination, from the viewpoint of improving air permeability, partial welding is preferred. In a packaging material obtained by partially welding the intermediate layer and the outer layer, it is conceived that air can transfer from the through-hole H1 of the inner layer to the outer side air hole H2 passing through the outer layer through the gap between the intermediate layer and the outer layer, and air permeability of the packaging material can be further improved.

The method of partial welding is not particularly limited and a known method can be used, and an example is a method of welding using a heat roll having a pattern such as a lattice pattern or a dot pattern. Among these, from the viewpoint of improving adhesiveness, a lattice pattern is preferred. Furthermore, from the viewpoint of improving air permeability, the welding proportion of the partial welding (area proportion (%) of an area of a welded portion with respect to an area of the entire partially welded region) is, for example, 50% or less, preferably 30% or less, more preferably 20% or less, and from the viewpoint of improving adhesiveness, is preferably 8% or more, and more preferably 12% or more.

Furthermore, when the laminate including the inner layer and the intermediate layer and the outer layer having the outer side air hole H2 are laminated, it is preferred to dispose the through-hole H1 of the inner layer and the outer side air hole H2 in a manner that the through-hole H1 and the outer side air hole H2 are not located at the same position. The phrase "at the same position" refers to a state in which a part of the through-hole H1 of the inner layer is visible when the outer side air hole H2 is viewed from the outer layer surface. When the through-hole H1 of the inner layer and the outer side air hole H2 are not located at the same position, when an oxygen scavenger package is formed, leakage of the oxygen scavenger disposed inside to the outside can be effectively prevented while adhering of a component disposed outside to the oxygen scavenger disposed inside can be effectively prevented.

### [Oxygen Scavenger Package]

The packaging material of the present invention is preferably used for production of an oxygen scavenger package. Specifically, by packaging an oxygen scavenger using the packaging material of the present invention, an oxygen scavenger package can be obtained.

That is, the oxygen scavenger package of the present invention includes the air-permeable packaging material for an oxygen scavenger described above and the oxygen scavenger wrapped by the air-permeable packaging material for an oxygen scavenger.

Since the packaging material of the present invention can be produced using existing manufacturing apparatus and manufacturing conditions without the use of a special manufacturing apparatus and exhibits stable air permeability with little individual difference, an oxygen scavenger package obtained using the packaging material has a short deoxidation time and excellent oxygen absorption performance, and can exhibit stable oxygen absorption performance with little individual difference.

The method of packaging the oxygen scavenger using the packaging material of the present invention is not particularly limited, and an appropriate and suitable method can be employed taking the purpose of use, environment, and the like into consideration. For example, the oxygen scavenger is preferably wrapped in a manner that the oxygen scavenger is brought into contact with the inner layer of the packaging material.

The type of the oxygen scavenger is not particularly limited, and a known oxygen scavenger can be used. Examples thereof include a metal powder such as an iron powder, an organic compound such as ascorbic acid and glycerin, and a macromolecular compound having a carbon-carbon double bond. The oxygen scavenger does not need to be necessarily one component and may be, for example, a combination of a metal powder such as an iron powder, and a metal catalyst, water, a metal salt, or a carrier.

The form of the oxygen scavenger is not particularly limited, and appropriate and suitable form can be employed taking the purpose of use, environment, and the like into consideration. For example, the form may be a powder form or a form obtained by shape processing into a tablet or the like. In a case of a powder form, the size and the shape of holes, the layer structure, and the like are preferably adjusted in a manner that the powder does not leak from the through-hole H1 of the inner layer and the outer side air hole H2 to the outside.

Although the embodiments of the present invention have been described above, the present invention is not limited to the above-described embodiments, and includes all aspects included in the concept of the present invention and the scope of the claims, and can be variously modified within the scope of the present invention.

### Examples

Hereinafter, the present embodiment will be described in detail using Examples and Comparative Examples, but the present embodiment can be modified as appropriate as long as the present embodiment achieves the effects of the present invention. Note that "parts" in Examples and Comparative Examples refer to parts by mass when not specifically stated. Various measurements and evaluations in Examples and Comparative Examples were performed as follows.

### (Maximum Endothermic Peak of Inner Layer)

The inner layer used in Examples and Comparative Examples was punched into a circle having a diameter of 4 mm to obtain a measurement sample.

About 10 mg of a measurement sample as an inner layer was filled in an aluminum pan, and differential scanning calorimetry was performed under the following conditions using a differential scanning calorimeter DSC-60 (available from Shimadzu Corporation).

### (Measurement Condition)

Differential scanning calorimetry was performed in a nitrogen atmosphere under conditions of heating from 50°C to 200°C at 10°C per minute (heating 1), then cooling from 200°C to 50°C at 10°C per minute (cooling 1), and heating again from 50°C to 200°C at 10°C per minute (heating 2).

The maximum endothermic peak in the process of (heating 2) was defined as the maximum endothermic peak of the inner layer. The temperature of the maximum endothermic peak was defined as the temperature at the top of the peak.

When the maximum endothermic peak is at 120°C or more, a packaging material having stable air permeability and capable of exhibiting stable oxygen absorption performance can be obtained.

### (Opening Diameter)

For the opening diameter, the through-hole H1 on the surface (face that was not in contact with the intermediate layer) of the inner layer of the packaging material multilayered film was observed, and the dimension (major axis) of the longest part of the opening diameter was measured. The measurement was performed by measuring a distance between two points by using a digital microscope (VHX-5000, available from Keyence Corporation) and its accompanying software. Furthermore, the measurement was performed for freely chosen 4 through-holes H1 on the surface of the inner layer, and an average value of the measured value (N = 4) was used as the opening diameter (diameter φ1).

### (Air Resistance)

The air resistance of the air-permeable packaging material for an oxygen scavenger and the intermediate layer was measured by using a digital Oken type air permeability tester (EG02, available from Asahi Seiko Co., Ltd.) in accordance with JIS P8117:2009. Note that the measurement was performed by a mode in which a median of the measurable range was 2000.

The measurement of the air resistance of the air-permeable packaging material for an oxygen scavenger was performed 30 times for the same packaging material obtained by the method described in each of Examples and Comparative Examples (that is, 30 air-permeable packaging materials for an oxygen scavenger corresponding to each of Examples and Comparative Examples were prepared for each of Examples and Comparative Examples, and the air resistance was measured for each of the air-permeable packaging materials). Table 2 shows the air resistance of the air-permeable packaging material for an oxygen scavenger. Specifically, the average value (ave.), the maximum value (max.), the minimum value (min.), and the standard deviation (σ) of the air resistance obtained from the results of 30 times of measurement are shown in Table 2. Note that the air-permeable packaging material for an oxygen scavenger used for the measurement was a sheet-like material in which an outer layer and a two layer composite film were laminated before being folded in two to form a pouch-like shape.

The measurement of the air resistance of the intermediate layer was performed 30 times for the same intermediate layer. That is, 30 test pieces were taken from the same oil-resistant paper as that used as the intermediate layer in Examples and Comparative Examples for measurement of air resistance, and the air resistance of each test piece was measured. The average value of the air resistance of the obtained 30 test pieces was defined as the air resistance of the intermediate layer.

### (Melting Point)

A DSC curve at the time of reheating after heating and cooling under the following conditions was obtained using the following apparatus. The peak temperature of the melting peak was defined as the melting temperature in accordance with "9.1 Method for Determining Melting Temperatures" of JIS K7121:2012.

### Device: DSC-60, available from Shimadzu Corporation

Conditions: Heating from 60°C to 200°C at 10 °C/min, then cooling from 200°C to 70°C at 10°C/min, and subsequently heating from 70°C to 160°C at 5°C/min.

### (Oxygen Absorption Performance)

For the evaluation of the oxygen absorption performance, using an oxygen scavenger package produced by the following method (1), evaluation was performed by the following method (2). The production method and the evaluation method of the oxygen scavenger package will be described in detail below.

### (1) Production of Oxygen Scavenger Package

In the air-permeable packaging material for an oxygen scavenger (a pouch having an outer size of 40 mm × 40 mm) obtained in each of Examples and Comparative Examples, 1.4 g of an oxygen scavenger (iron-based self-reacting oxygen scavenger containing an iron powder, calcium chloride, sodium chloride, diatomaceous earth impregnated with water, and active carbon) was charged, and then the open side was heat-sealed and closed. An oxygen scavenger package was thus obtained.

As described above, 30 oxygen scavenger packages were produced for each of Examples and Comparative Examples.

Note that, the produced oxygen scavenger package was placed in a gas barrier bag (a laminate of barrier nylon and LLDPE, available from Fukusuke Kogyo Co., Ltd.) having low oxygen permeability, with its opening being sealed by heat-sealing, and stored so as not to react with oxygen in the atmosphere until being subjected to the measurement of the amount of oxygen absorbed.

### (2) Evaluation

The oxygen scavenger package obtained above was placed in an oxygen barrier bag (size: 180 mm × 250 mm; oxygen permeability: 0.53 mL/m²·24 h·MPa or less (Mocon method, 20°C, 65%RH)) together with 250 mL of air and tightly sealed. Then, the sealed oxygen barrier bag was immediately placed in a thermostat at 25°C.

Thereafter, the oxygen concentration change was plotted by successively measuring the oxygen concentration in the oxygen barrier bag every 8 hours, and the estimated time at which the oxygen concentration in the oxygen barrier bag became 0.1 vol.% or less was evaluated as the deoxidation time.

Note that the measurement of the oxygen concentration was performed by automated measurement by inserting a measurement needle inside the oxygen barrier bag from a rubber sheet for sampling (25 mm × 25 mm; thickness: 2 mm), the rubber sheet being adhered onto the surface of the oxygen barrier bag in advance, by using a gas analyzer ("CheckMate 3", available from Mocon Dansensor).

The above measurement was performed on 30 oxygen scavenger packages, and evaluation was performed as an average value (ave.), a maximum value (max), a minimum value (min), and a standard deviation (σ) of the deoxidation time for each oxygen scavenger package of Examples or Comparative Examples.

The shorter the deoxidation time, the better the oxygen absorption performance. In addition, the smaller the standard deviation (σ) of the deoxidation time, the smaller the individual difference, which means that stable oxygen absorption performance can be exhibited. In this Example, a sample having an average value (ave.) of deoxidation time of less than 40 hours was evaluated as good, and a sample having a standard deviation (σ) of deoxidation time of 4.0 or less was evaluated as good.

### [Production of Air-Permeable Packaging Material for Oxygen Scavenger]

### Example 1

### <Outer Layer>

As the outer layer, a film having a two-layer structure having undergone a hole opening treatment described below was used.

First, a polyethylene terephthalate (thickness: 12 µm; melting point: 265°C; hereinafter, referred to as "PET") and a low-density polyethylene (thickness: 15 µm; melting point: 110°C; hereinafter, referred to as "PE") were layered, extrusion-laminated, and thus a film having a two-layer structure was obtained.

Then, the obtained film having the two-layer structure was subjected to a hole opening treatment using a needle roll (needle pattern: 2.0 mm × 4.0 mm) in a manner that from the surface of the PET to the PE was penetrated, and thus outer side air holes were formed.

### <Intermediate Layer>

As the intermediate layer, an oil-resistant paper (air resistance: 911 seconds, basis weight: 35 g/m²; hereinafter, referred to as "oil-resistant paper 35") impregnated with a starch-based oilproof agent as an oil-resistant paper containing no fluorine-containing oilproof agent was used.

### <Inner Layer>

As the inner layer, a film made of linear low-density polyethylene (HR543, available from SKYFILM Co., LTD, thickness: 30 µm) was used.

A needle roll (needle pattern: 2.0 mm × 2.0 mm, 44 holes/cm²) having a metal needle (diameter of metal needle: 0.6 mm) heated to 350°C was pressed against the film made of the linear low-density polyethylene to form a through-hole H1, thus obtaining an inner layer.

### (Air-Permeable Packaging Material)

First, among the surfaces of the inner layer, the inner layer and the intermediate layer were laminated in such a manner that the surface on the tip end portion side of the needle roll when the through-hole H1 was formed faced the intermediate layer side, and the surface on the root side of the needle roll when the through-hole H1 was formed faced the inside (the side opposite to the intermediate layer), and were subjected to heat lamination processing at 200°C to be entirely welded, thereby obtaining a two-layer composite film.

Thereafter, the outer layer and the two-layer composite film were cut into product dimensions, the PE side of the outer layer and the intermediate layer side of the two-layer composite film were laminated to face each other, and heat-laminated at 200°C to be entirely welded.

The outer layer and the two-layer composite film were combined and folded in two so that the inner layer was on the inner side, and the two sides were welded at 200°C with a width of 6 mm to obtain an air-permeable packaging material for an oxygen scavenger. The obtained air-permeable packaging material for an oxygen scavenger has a pouch-like shape having an outer dimension of 40 mm × 40 mm in which one side is an opening.

The obtained air-permeable packaging material for an oxygen scavenger had a layer configuration of an outer layer (PET/PE)/an intermediate layer (oil-resistant paper 35)/an inner layer (LLDPE30). In addition, the opening diameter φ1 of the through-hole H1 formed in the inner layer of the obtained air-permeable packaging material for an oxygen scavenger was 351 µm.

The oxygen absorption performance of the obtained air-permeable packaging material for an oxygen scavenger was evaluated. The results are presented in Table 2.

### Examples 2 and 3 and Comparative Examples 1 to 4

An air-permeable packaging material for an oxygen scavenger was obtained in the same manner as in Example 1 except that the inner layer was changed to a film made of a linear low-density polyethylene shown in Table 1 instead of HR543. The oxygen absorption performance of the obtained air-permeable packaging material for an oxygen scavenger was evaluated. The results are presented in Table 2.

### [Table 1]

**Table 1**

| Linear low-density polyethylene of inner layer used in examples below | Brand | Manufacturer | Maximum endothermic peak (°C) |
|---|---|---|---|
| Example 1 | HR543 | SKYFILM Co., LTD | 122.29 |
| Example 2 | KF201 | SKYFILM Co., LTD | 123.15 |
| Example 3 | HR611 | SKYFILM Co., LTD | 125.15 |
| Comparative Example 1 | TUX-FCS | Mitsui Chemicals Tohcello, Inc | 114.55 |
| Comparative Example 2 | TUX-TCS-NP | Mitsui Chemicals Tohcello, Inc | 113.64 |
| Comparative Example 3 | TUX-FCD-NP | Mitsui Chemicals Tohcello, Inc | 118.33 |
| Comparative Example 4 | HR553 | SKYFILM Co., LTD | 117.76 |

### [Table 2]

**Table 2**

| | Inner layer (LLDPE) | | Air resistance of packaging material (sec) | | | | Oxygen absorption performance evaluation (deoxidation time (hour)) | | | |
|---|---|---|---|---|---|---|---|---|---|---|
| | opening diameter φ1 of through-hole H1 (µm) | Maximum endothermic peak (°C) | ave. | max. | min. | σ | ave. | max. | min. | σ |
| Example 1 | 351 | 122.29 | 17616 | 87969 | 3121 | 12049 | 26 | 36 | 20 | 4.0 |
| Example 2 | 351 | 123.15 | 14274 | 41806 | 2756 | 8467 | 25 | 32 | 16 | 3.2 |
| Example 3 | 351 | 125.15 | 16981 | 49501 | 836 | 10448 | 24 | 30 | 14 | 3.9 |
| Comparative Example 1 | 351 | 114.55 | 37883 | 99999 | 4594 | 24328 | 40 | 44 | 30 | 3.9 |
| Comparative Example 2 | 351 | 113.64 | 24438 | 87969 | 6628 | 14783 | 29 | 43 | 21 | 4.7 |
| Comparative Example 3 | 351 | 118.33 | 31404 | 99999 | 1480 | 19623 | 35 | 53 | 23 | 6.2 |
| Comparative Example 4 | 351 | 117.76 | 37640 | 99999 | 5805 | 20404 | 42 | 56 | 30 | 6.9 |

As shown in Table 2, the oxygen scavenger packages obtained by using the air-permeable packaging materials for oxygen scavenger of the Examples have a small standard deviation of the deoxidation time, and thus it is understood that the oxygen scavenger packages have no variation in the packaging materials, have a small individual difference, and can exhibit stable oxygen absorption performance. In addition, it is understood that the oxygen scavenger package obtained using the air-permeable packaging material for an oxygen scavenger of Examples is excellent in oxygen absorption performance because the average value of the deoxidation time is short. As described above, it is understood that the air-permeable packaging material for an oxygen scavenger of the present invention is capable of providing an oxygen scavenger package that can exhibit excellent oxygen absorption performance with short deoxidation time and stable oxygen absorption performance with little individual difference by using existing manufacturing apparatus and manufacturing conditions without use of special manufacturing apparatus.

## Claims

1. An air-permeable packaging material for an oxygen scavenger, comprising, in this order, an outer layer containing a thermoplastic resin, an intermediate layer containing one or more selected from paper and nonwoven fabric, and
an inner layer containing a linear low-density polyethylene,
wherein the inner layer includes a through-hole H1, the through-hole H1 having an opening diameter φ1 of 150 µm or more and 3000 µm or less, and
when differential scanning calorimetry is performed using the inner layer as a measurement sample in a nitrogen atmosphere under conditions of heating from 50°C to 200°C at 10°C per minute (heating 1), then cooling from 200°C to 50°C at 10°C per minute (cooling 1), and heating again from 50°C to 200°C at 10°C per minute (heating 2), a maximum endothermic peak is 120°C or more in a process of (heating 2).

2. The air-permeable packaging material for an oxygen scavenger according to claim 1, wherein the intermediate layer includes an oil-resistant paper containing no fluorine.

3. The air-permeable packaging material for an oxygen scavenger according to claim 1 or 2, having an air resistance of 10000 seconds or more as measured by an Oken type tester method in accordance with JIS P8117:2009.

4. The air-permeable packaging material for an oxygen scavenger according to any one of claims 1 to 3, wherein the through-hole H1 is present at a density of 1 hole/cm² or more and 60 holes/cm² or less.

5. The air-permeable packaging material for an oxygen scavenger according to any one of claims 1 to 4, wherein the intermediate layer has an air resistance of 2000 seconds or less as measured by an Oken type tester method in accordance with JIS P8117:2009.

6. The air-permeable packaging material for an oxygen scavenger according to any one of claims 1 to 5, wherein the intermediate layer is an oil-resistant paper containing no fluorine.

7. The air-permeable packaging material for an oxygen scavenger according to any one of claims 1 to 6, wherein the outer layer includes, in this order toward an intermediate layer side, a substrate layer containing one or more selected from polyethylene terephthalate and biaxially oriented polypropylene and a welding layer containing one or more selected from polyethylene and an ethylene copolymer.

8. An oxygen scavenger package, comprising:
the air-permeable packaging material for an oxygen scavenger according to any one of claims 1 to 7; and
an oxygen scavenger wrapped by the air-permeable packaging material for an oxygen scavenger.

9. A method for producing an air-permeable packaging material for an oxygen scavenger, the method comprising:
obtaining an inner layer by pressing a heated metal needle against a film containing a linear low-density polyethylene to form a through-hole H1; and
obtaining an air-permeable packaging material for an oxygen scavenger by laminating an outer layer containing a thermoplastic resin, an intermediate layer containing one or more selected from paper and nonwoven fabric, and the inner layer in this order,
wherein the metal needle has a radius of 0.3 mm or more and 2.0 mm or less,
the metal needle has a surface temperature of 150°C or more and 450°C or less, and
when differential scanning calorimetry is performed using the inner layer as a measurement sample in a nitrogen atmosphere under conditions of heating from 50°C to 200°C at 10°C per minute (heating 1), then cooling from 200°C to 50°C at 10°C per minute (cooling 1), and heating again from 50°C to 200°C at 10°C per minute (heating 2), a maximum endothermic peak observed is at 120°C or more in a process of (heating 2).
